# EUROPÄISCHE PATENTSCHRIFT

(11) **EP 3 328 612 B1**
(45) Veröffentlichungstag und Bekanntmachung des Hinweises auf die Patenterteilung: **08.09.2021**
(21) Anmeldenummer: 16754210.9
(22) Anmeldetag: 29.07.2016
(51) Int. Cl.: B29C 45/80, B29C 45/76, B29C 45/64, B23Q 17/24, B23Q 17/22, B29C 45/34

(54) **SYSTEM ZUR POSITIONSÜBERWACHUNG DER SCHLIESSEINHEIT EINER SPRITZGIESSMASCHINE**
SYSTEM FOR MONITORING THE POSITION OF THE CLOSING UNIT OF AN INJECTION MOLDING MACHINE
SYSTÈME POUR SURVEILLER LA POSITION DE L'UNITÉ DE FERMETURE D'UNE MACHINE DE MOULAGE PAR INJECTION

(30) Priorität: 30.07.2015 DE 102015112455
(43) Veröffentlichungstag der Anmeldung: 06.06.2018
(73) Patentinhaber: Klöckner Desma Elastomertechnik GmbH, 78567 Fridingen (DE)
(72) Erfinder: MATTES, Klaus, 78570 Mühlheim (DE)
(74) Vertreter: Schneiders & Behrendt Bochum
(86) Internationale Anmeldenummer: PCT/EP2016/068192
(87) Internationale Veröffentlichungsnummer: WO 2017/017261

(56) Entgegenhaltungen:
- WO-A1-90/08638
- US-A- 4 470 787
- US-A- 4 892 690
- US-A1- 2015 202 815

## Beschreibung

Die Erfindung betrifft eine Spritzgießmaschine mit einem System zur Positionsüberwachung der Schließeinheit der Spritzgießmaschine.

Obwohl das erfindungsgemäße System hierauf nicht beschränkt ist, wird es im Folgenden anhand einer vertikalen Spritzgießmaschine erläutert.

Die Schließeinheit der Spritzgießmaschine fährt vor dem Spritzvorgang die an Werkzeugaufspannplatten angeordneten Formwerkzeugteile mit der dazwischen angeordneten Formkavität in die Schließposition und baut den entsprechenden Schließdruck auf. Danach wird die Formkavität mit dem entsprechenden Material verfüllt. Bevor das Formwerkzeug mittels der Schließeinheit vollständig geöffnet wird, damit das fertig gespritzte Teil entnommen werden kann, wird das Formwerkzeug jedoch zunächst nur einen geringen Spalt geöffnet, damit das gegossene Teil entgasen kann. Dieser Verfahrensschritt wird Bumping genannt.

Damit dieses Bumping bei überbrücktem Lichtgitter durchgeführt werden kann, muss sichergestellt sein, dass das Formwerkzeug in der Spaltposition still steht.

Diese Spaltüberwachung wurde bislang entweder mit Nockenschaltern durchgeführt, die an der Form angebracht werden.

Die zweite Möglichkeit war die, an der Form sichere Lichtschranken anzubringen. Diese Lichtschranken schauen durch einen etwa 6 mm großen Spalt. Wird die Lichtschranke unterbrochen, ist die Form weiter als 6 mm geöffnet und die Maschine muss sicher abschalten. Bleibt der Spalt kleiner als 6 mm entsteht keine Gefahr für den Maschinenbediener, und die Maschine darf auch bei unterbrochenem Lichtgitter die Bumpingsequenz durchführen.

Nachteilig bei diesen Lösungen war der große Aufwand, da sowohl die Nockenschalter als auch die Lichtschranken bei jedem Werkzeugwechsel neu justiert werden mussten. Dieses war sehr zeitaufwändig und auch störanfällig.

Aus der JP 2001-353 759 A ist aus dem Abstract der Hinweis zu entnehmen, dass ein Positionssensor für die Spaltüberwachung beim Bumping bei einer Spritzgießmaschine vorgesehen sein kann.

Eine ähnliche Technik ist in der US 2015/0202815 A1 beschrieben.

Desweiteren geht aus der US 4 470 787 ein Überwachungssystem hervor, bei dem mehrere Sensoren eingesetzt werden. Es handelt sich hierbei allerdings um technisch aufwändige Bauteile, deren Betrieb störungsanfällig ist.

Auch aus der DE 10 2013 101 997 A1 ist eine Überwachung des Formwerkzeugs einer Spritzgießmaschine bekannt, bei der zunehmende Ablagerungen in Entlüftungspalten, über die die Entgasung des Werkzeugs erfolgt, zu Verformungen des Werkzeugs führen, wobei eine Abstandssensorik eingesetzt wird.

Darüber hinaus ist aus der DE 10 2013 011 849 A1 bei Spritzgießmaschinen eine Motorleistungsunterbrechungsschaltung für bestimmte Unregelmäßigkeiten im Produktionsablauf bekannt, wobei auch die Position einer Sicherheitstür überwacht wird.

Ähnliches geht aus der JP 2001- 145 948 A hervor.

Der Erfindung liegt die Aufgabe zugrunde, eine Spritzgießmaschine mit einem System der eingangs genannten Art so zu verbessern, dass der Hardware- und Justieraufwand erheblich reduziert wird.

Die Erfindung löst diese Aufgabe gemäß Anspruch 1 durch ein System zur Positionsüberwachung der Schließeinheit einer Spritzgießmaschine bei Überbrückung eines als Sicherung der Schließeinheit und des Werkzeugbereichs der Spritzgießmaschine dienenden Lichtgitters, wobei die Spritzgießmaschine mindestens ein aus mindestens zwei Teilen bestehendes Formwerkzeug aufweist, das mindestens eine Formkavität umschließt, wobei die Spritzgießmaschine eine speicher- programmierbare Steuerung (SPS) zur Steuerung des Produktionsablaufs in der Maschine aufweist und die Bewegungsabläufe beim Schließen und Öffnen des Formwerkzeugs durch Sensoren erfasst und deren Signale in der SPS verarbeitet werden, wobei in der SPS eine Bewegungsüberwachungseinheit (MOC) integriert ist zur indirekten Positionsüberwachung der Schließeinheit bzw. der Position der Formwerkzeugteile relativ zueinander, wobei als Sensoren Wegmessstäbe vorgesehen sind, deren Signale über die MOC in der SPS verarbeitet werden, wobei einer der Wegmessstäbe für die Überwachung der Schließbewegung des Werkzeugs (die SPS meldet: Position erreicht) zuständig ist und zwei weitere Messstäbe zur Positionsermittlung der Werkzeugteile, nämlich zur Überwachung der Spaltbreite des Abstandsspalts zwischen den Formwerkzeugteilen.

Der Hardwareaufwand reduziert sich hierbei auf zwei zusätzliche Wegaufnehmer sowie das MOC-Modul, wobei es sich hierbei um eine Karte für die Sicherheits-SPS handelt, mit der Motoren bzw. Bewegungen überwacht werden können.

Mit Hilfe des MOC (Bewegungsüberwachungseinheit) ist es möglich, eine indirekte Positionsüberwachung zu realisieren. Mit dieser Positionsüberwachung soll die Position der Schließeinheit überwacht werden, während das Lichtgitter unterbrochen ist. Die Form darf nicht mehr als 6 mm öffnen. Die Funktion Bumping ist uneingeschränkt möglich, da hier die Form nur wenige Millimeter (1 bis 2 mm) geöffnet werden muss. Um die Geschwindigkeit bzw. die Position sicher erfassen zu können, benötigt das Modul zwei Weg-Informationen, die im idealen Fall von zwei unabhängigen, physikalisch unterschiedlichen Wegmesssystemen erfasst werden, um einen hohen CCF-Wert zu erreichen, wobei CCF "common cause failure factor" bedeutet. Diese Wegmesssyteme müssen im eigentlichen Sinne nicht sicher sein. Um die Sicherheit des Gesamtsystems jedoch berechnen zu können, wird für das Wegmesssystem der so genannte MTTFd-Wert benötigt, also die durchschnittliche Zeit zwischen sicherheitsrelevanten Fehlern oder Ausfällen.

Im vorliegenden Fall wird ein MTTFd-Wert von 1.536.098h garantiert.

Der Ablauf der Überwachung ist gemäß Anspruch 2 folgender:
Die Form schließt bis das Werkzeug geschlossen ist. Das MOC-Modul erkennt den Stillstand und bekommt von der SPS das Signal "Position erreicht". Über einen zusätzlichen Eingang des im Motioncontroler vorhandenen Sicherheitsbausteins "Geschwindigkeitsüberwachung" wird die Stillstandsüberwachung eingeschaltet. Nun überwacht das MOC-Modul ein Stillstandspositionsfenster von beispielsweise +/- 3 mm. Bleibt die Form innerhalb dieser +/- 3 mm, gibt der Baustein Stillstand aus und das Lichtgitter kann überbrückt werden. Das Problem bei dieser indirekten Positionsüberwachung ist, dass auch bei einem Stillstand außerhalb des Positionsfensters "Stillstand" signalisiert wird. Deshalb wird ein Speicherbaustein beim Start der Überwachung gesetzt und, sobald das Stillstandssignal abfällt, rückgesetzt. Dann muss noch eine Plausibilitätsprüfung der Signale erfolgen.

Für das MOC-Modul existiert in der SPS ein separater Logikeditor. Dieser Logikeditor bzw. das MOC-Modul kommunizieren mit der restlichen Logik bzw. CPU über eine festgelegte Schnittstelle (hier mit 18 Bit Eingangs- und 16 Bit Ausgangsdaten). Außerdem besitzt das MOC-Modul zwei Hardware-Eingänge für die beiden Wegaufnehmer mit den Schnittstellen TTL, HTL, inkremental RS-422, SIN/COS, SSI,
wobei TTL für Transistor-Transistor-Logik steht, die eine Schaltungstechnik für logische Schaltungen (Gatter) ist, bei der als aktives Bauelement der Schaltung planare npn-Bipolartransistoren verwendet werden,
HTL für Hochvolt-Transistor-Logik steht,
RS-422 eine Schnittstellennorm für eine leitungsgebundene differentielle serielle Datenübertragung ist,
SIN/COS Sinus-Cosinus-Geber sind, die sich von Impulsgebern dadurch unterscheiden, dass sie anstelle von Rechteckimpulsen sinusförmige Signale ausgeben. Diese Signale können zusätzlich mit Analog-Digital-Wandlern abgetastet werden und damit der Lageistwert wesentlich höher aufgelöst werden. Sie kommen deshalb besonders bei Servoanwendungen mit hohen Ansprüchen an die Genauigkeit der Lageerfassung zum Einsatz.

SSI schließlich ist eine Synchron-Serielle Schnittstelle für Absolutwertgeber (Wegmesssysteme). Sie ermöglicht es, durch eine serielle Datenübertragung eine absolute Information über die Position zu erhalten.

Das Programm zur Überwachung des oben beschriebenen StillstandsPositionsfensters setzt sich aus zwei Bausteinen zusammen. Der erste Baustein vergleicht zwei Geschwindigkeitssignale der Hardware-Eingänge des Moduls und gibt ein sicheres Geschwindigkeitssignal aus. Dieses sichere Geschwindigkeitssignal wird auf den Geschwindigkeitsüberwachungsbaustein gegeben. Zusätzlich zum Geschwindigkeitssignal bekommt dieser Baustein noch ein Freigabesignal, welches die Überwachung ein-/ausschaltet. Der Baustein ist so konfiguriert, dass er bei aktivierter Überwachung die relative Positionsänderung erfasst und überprüft, ob diese in dem Fenster von +/- 3 mm bleibt. Das Signal zur Freigabe kommt von der CPU bzw. von der Standardlogik der Sicherheits-SPS. Die Überwachungsfreigabe setzt dabei voraus, dass die Form geschlossen und der Schließdruck aufgebaut wurde. Diese Signale werden in ihrer Signalabfolge über den Baustein "Schalterauswertung" überwacht. Der Zustand wird mit einem RS-FlipFlop so lange gespeichert, so lange die Sicherheit des MOC-Moduls gegeben ist. Eine weitere Bedingung ist, dass das Signal "Position erreicht" während des gesamten Prozesses logisch 1 ist. Die Signale werden in ihrer Signalabfolge über den Baustein Schalterauswertung überwacht.

Das Signal "Druck aufgebaut" kommt von einem Druckschalter, der den Schließdruck der Maschine überwacht.

Das Signal "Position erreicht" wird von der SPS unter folgenden Bedingungen erzeugt:
Bumping aktiv; Form war einmal vollständig geschlossen (Wegmessung der SPS auf 0 mm).

Der hardwaremäßige Aufbau an einer vertikal arbeitenden Spritzgießmaschine wird im Folgenden anhand von Zeichnungen dargestellt.

Es zeigen:
- Fig. 1:: in perspektivischer Darstellung eine vertikal arbeitende Spritzgießmaschine;
- Fig. 2:: Ausschnittvergrößerung C aus Fig. 1;

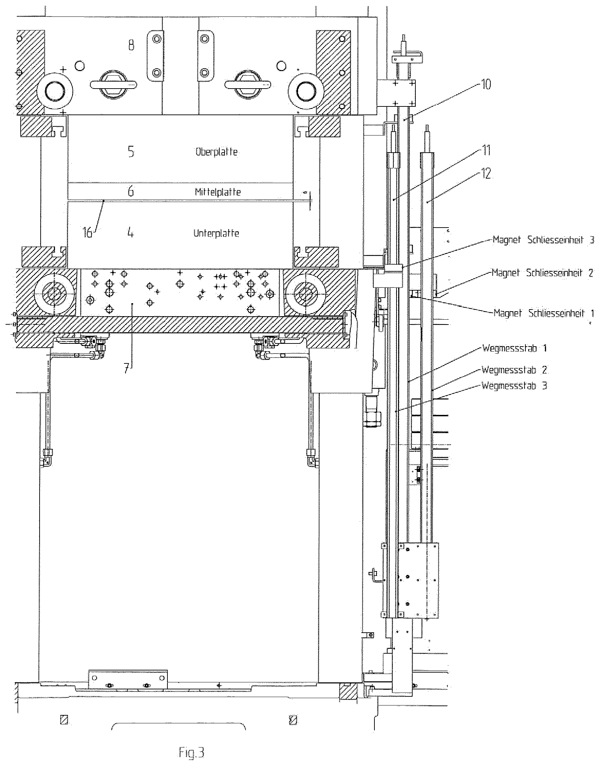

- Fig. 3:: Anordnung der Wegmessstäbe an der Spritzgießmaschine gemäß Fig. 1 in Seitenansicht

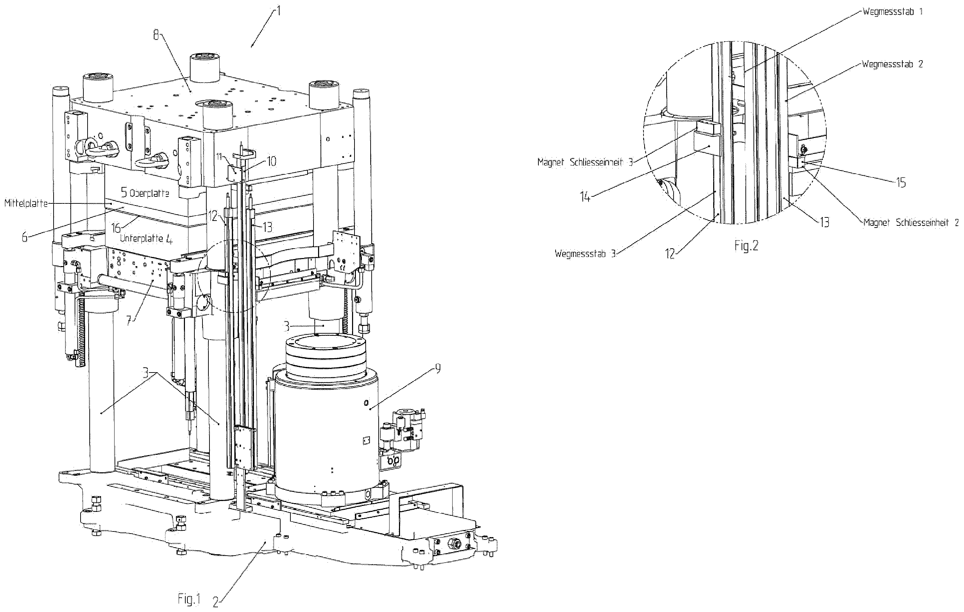

In der Figur 1 ist eine vertikal arbeitende Spritzgießmaschine dargestellt und allgemein mit dem Bezugszeichen 1 versehen. Sie besteht aus einem Maschinenbett 2 und senkrecht vom Maschinenbett 2 aufsteigenden Holmen 3, an denen das aus Oberplatte 4, Unterplatte 5 und Mittelplatte 6 bestehende Formwerkzeug, die an einer unteren und einer oberen Formaufspannplatte 7 und 8 angeordnet sind, in die Schließ- bzw. Öffnungsposition verfahrbar ist. Der in der Schließstellung des Formwerkzeugs 4 bis 6 den Schließdruck aufbauende Druckmittelzylinder 9 ist in der Darstellung aus der Maschine herausgefahren.

Mit dem Bezugszeichen 10 ist ein erster Wegmessstab bezeichnet, der in Zusammenwirken mit dem Magneten 11 die Schließstellung des Formwerkzeugs vor dem Spritzvorgang überwacht.

Zwei weitere Wegmessstäbe 12 und 13 dienen im Zusammenwirken mit den Magneten 14 und 15 zur Überwachung der Positionen der Ober/Mittelplatte 5, 6 relativ zur Unterplatte 4 und dienen in dieser Funktion zur Überwachung der Spaltbreite eines zwischen Unter- und Mittel/Oberplatte, bei der BumpingSequenz (Ausgasung des Formteils) erforderlichen Spalts 16.

Die Signale der Wegmessstäbe 10, 12, 13 werden der nicht näher dargestellten Maschinensteuerung zugeleitet, wie es im Detail weiter oben beschrieben worden ist.

## Patentansprüche

1. Spritzgießmaschine (1) mit einem System zur Positionsüberwachung der Schließeinheit der Spritzgießmaschine (1) bei Überbrückung eines als Sicherung der Schließeinheit und des Werkzeugbereichs der Spritzgießmaschine (1) dienenden Lichtgitters, wobei die Spritzgießmaschine (1) mindestens ein aus mindestens zwei Teilen bestehendes Formwerkzeug (4, 5, 6) aufweist, das mindestens eine Formkavität umschließt, wobei die Spritzgießmaschine (1) eine speicherprogrammierbare Steuerung SPS zur Steuerung des Produktionsablaufs in der Maschine aufweist und die Bewegungsabläufe beim Schließen und Öffnen des Formwerkzeugs (4, 5, 6) durch Sensoren (10, 12, 13) erfasst und deren Signale in der SPS verarbeitet werden, wobei die SPS ein Bewegungsüberwachungsmodul MOC aufweist zur indirekten Positionsüberwachung der Schließeinheit und der Position der Formwerkzeugteile (4, 5, 6) relativ zueinander, wobei als Sensoren Wegmessstäbe (10, 12, 13) vorgesehen sind, deren Signale über die MOC in der SPS verarbeitet werden, wobei einer der Wegmessstäbe (10) für die Überwachung der Schließbewegung des Formwerkzeugs (4, 5, 6) zuständig ist und zwei weitere Messstäbe (12, 13) in Zusammenwirken mit Magneten (14, 15)zur Überwachung der Positionen der Werkzeugteile (5, 6) relativ zum Werkzeugteil (4) dienen, nämlich zur Überwachung der Spaltbreite des Abstandsspalts (16) zwischen den Werkzeugteilen (4, 6), wobei die Werkzeugteile (4,6) nach dem Schließdruckaufbau und dem Formfüllgang im folgenden Bumpingschritt zueinander einen Abstand (16) einhalten müssen, dem ein bestimmter Maximalwert zugeordnet ist, bei dessen Überschreiten die Spritzgießmaschine abschaltet..

2. Spritzgießmaschine nach Anspruch 1, **dadurch gekennzeichnet, dass** der Bewegungsablauf der Spritzgießmaschine (1) folgende Schritte umfasst:
a.) die Schließeinheit schließt das Formwerkzeug (4, 5, 6) und der MOC erkennt den Stillstand
b.) durch die Geschwindigkeitsüberwachung im MOC-Modul wird die Stillstandsüberwachung eingeschaltet;
c.) das MOC-Modul überwacht ein Stillstandspositionsfenster von +/-1-3 mm;
d.) bei Verharren des Formwerkzeugs (4, 5, 6) innerhalb dieser +/- 1-3 mm wird vom MOC-Modul Stillstand erkannt und das Lichtgitter kann überbrückt werden.

3. Spritzgießmaschine nach Anspruch 1 oder 2, **dadurch gekennzeichnet, dass** beim Start der Überwachung ein Speicherbaustein gesetzt wird, der, sobald das Stillstandsignal abfällt, zurückgesetzt wird.

4. Spritzgießmaschine nach einem der Ansprüche 1 bis 3, **dadurch gekennzeichnet, dass** das MOC-Modul einen separaten Logikeditor aufweist, der über eine festgelegte Schnittstelle mit der SPS kommuniziert und darüber hinaus zwei Hardware-Eingänge für die als Wegaufnehmer dienenden Messstäbe (10, 12, 13) aufweist.

5. Spritzgießmaschine nach einem der Ansprüche 1 bis 4, **gekennzeichnet durch** ein Programm zur Überwachung des Stillstandspositionsfensters, welches sich aus zwei Bausteinen zusammensetzt, wobei der erste Baustein die zwei Geschwindigkeitssignale der Hardware-Eingänge des MOC-Moduls vergleicht und ein sicheres Geschwindigkeitssignal ausgibt, welches auf einen Geschwindigkeitsüberwachungsbaustein gegeben wird, der zusätzlich zum Geschwindigkeitssignal ein Freigabesignal bekommt, welches die Überwachung ein-/ausschaltet und dabei so konfiguriert ist, dass er bei aktivierter Überwachung die relative Positionsänderung erfasst und überprüft, ob diese in einem Fenster von +/- 1-3mm bleibt, wobei die Überwachungsfreigabe voraussetzt, dass das Formwerkzeug (4, 5, 6) geschlossen und der Schließdruck aufgebaut ist, wobei diese Signale in ihrer Signalfolge über den Baustein Schalterauswertung überwacht werden.

6. Spritzgießmaschine nach Anspruch 5, **dadurch gekennzeichnet, dass** das Signal "Position erreicht" während des gesamten Prozesses logisch 1 ist.

7. Spritzgießmaschine nach einem der Ansprüche 1 bis 6, **dadurch gekennzeichnet, dass** ein Druckschalter den Schließdruck der Maschine (1) überwacht.

## Claims

1. Injection moulding machine (1) with a system for monitoring the position of the closing unit of the injection moulding machine (1) when bridging a light grid serving as a safeguard of the closing unit and the tool area of the injection moulding machine (1), wherein the injection moulding machine (1) comprises at least one mould tool (4, 5, 6) consisting of at least two parts that encloses at least one mould cavity, wherein the injection moulding machine (1) comprises a programmable logic controller PLC for controlling the production sequence in the machine and the movement sequences during closing and opening of the mould tool (4, 5, 6) are detected by sensors (10, 12, 13) and their signals are processed in the PLC, wherein the PLC comprises a movement monitoring module MOC for indirect position monitoring of the closing unit and of the position of the mould tool parts (4, 5, 6) relative to one another, wherein path measuring rods (10, 12, 13) are provided as sensors, the signals of which are processed via the MOC in the PLC, wherein one of the path measuring rods (10) is responsible for monitoring the closing movement of the mould tool (4, 5, 6) and two other measuring rods (12, 13) interacting with magnets (14, 15) serve to monitor the positions of the mould parts (5, 6) relative to the mould part (4), namely to monitor the gap width of the spacing gap (16) between the mould parts (4, 6), wherein the mould parts (4, 6) have to maintain a distance from one another following the build-up of closing pressure and the mould filling process in the following bumping step, to which distance a certain maximum value is assigned, upon exceeding of which the injection moulding machine is switched off.

2. Injection moulding machine according to claim 1, **characterised in that** the movement sequence of the injection moulding machine (1) comprises the following steps:
a.) the closing unit closes the mould tool (4, 5, 6) and the MOC detects the standstill,
b.) standstill monitoring is switched on by the speed monitoring in the MOC module;
c.) the MOC module monitors a standstill position window of +/- 1-3 mm;
d.) if the mould tool (4, 5, 6) remains within this +/- 1-3 mm, a standstill is detected by the MOC module and the light grid can be bridged.

3. Injection moulding machine according to claim 1 or 2, **characterised in that** a memory module is set at the start of monitoring, which module is reset as soon as the standstill signal drops.

4. Injection moulding machine according to any one of claims 1 to 3, **characterised in that** the MOC module comprises a separate logic editor, which communicates with the PLC via a defined interface and furthermore comprises two hardware inputs for the measuring rods (10, 12, 13) acting as path transducer.

5. Injection moulding machine according to any one of claims 1 to 4, **characterised by** a program for monitoring the standstill position window, which is composed of two modules, the first module comparing the two speed signals of the hardware inputs of the MOC module and emitting a reliable speed signal, which is given to a speed monitoring module, which in addition to the speed signal receives a release signal, which switches the monitoring on/off and is configured such that when the monitoring is activated it detects the relative position change and checks whether this remains in a window of +/- 1-3 mm, wherein the monitoring release presupposes that the mould tool (4, 5, 6) is closed and the closing pressure built up, wherein these signals are monitored in their signal sequence via the switch evaluation module.

6. Injection moulding machine according to claim 5, **characterised in that** the signal "Position reached" is logic 1 during the entire process.

7. Injection moulding machine according to any one of claims 1 to 6, **characterised in that** a pressure switch monitors the closing pressure of the machine (1).

## Revendications

1. Machine de moulage par injection (1) avec un système pour surveiller la position de l'unité de fermeture de la machine de moulage par injection (1) lors du court-circuitage d'une barrière lumineuse faisant office de blocage de l'unité de fermeture et de la zone d'outil de la machine de moulage par injection (1), dans laquelle la machine de moulage par injection (1) présente au moins un outil de moulage (4, 5, 6) consistant en au moins deux parties, qui renferme au moins une cavité de moulage, dans laquelle la machine de moulage par injection (1) présente un automate programmable industriel API pour commander le cycle de production dans la machine et détecte les cycles de déplacement lors de la fermeture et de l'ouverture de l'outil de moulage (4, 5, 6) par des capteurs (10, 12, 13) et dont les signaux sont traités dans l'API, dans laquelle l'API présente un module de surveillance de déplacement MOC pour surveiller indirectement la position de l'unité de fermeture et la position des parties formant outil de moulage (4, 5, 6) les unes par rapport aux autres, dans laquelle sont prévues en tant que capteurs des barres de mesure de trajectoires (10, 12, 13) dont les signaux sont traités par l'intermédiaire du MOC dans l'API, dans laquelle une des barres de mesure de trajectoires (10) est chargée de la surveillance du déplacement de fermeture de l'outil de moulage (4, 5, 6) et deux autres barres de mesure de trajectoires (12, 13) en coopération avec des aimants (14, 15) servent à surveiller les positions des parties formant outil (5, 6) par rapport à la partie formant outil (4), à savoir à surveiller la largeur de fente de la fente d'espacement (16) entre les parties formant outil (4, 6), dans laquelle les parties formant outil (4, 6) doivent obligatoirement, après l'établissement de la pression de fermeture et l'opération de remplissage de moule dans l'étape de bumping ultérieure, respecter un espacement (16) les unes par rapport aux autres, auquel est attribuée une valeur maximale définie, lors du dépassement de laquelle la machine de moulage par injection s'arrête.

2. Machine de moulage par injection selon la revendication 1, **caractérisée en ce que** le cycle de déplacement de la machine de moulage par injection (1) comprend des étapes suivantes :
a.) l'unité de fermeture ferme l'outil de moulage (4, 5, 6) et le MOC identifie l'arrêt,
b.) la surveillance de l'arrêt est activée par la surveillance de vitesse dans le module MOC ;
c.) le module MOC surveille une fenêtre de position d'arrêt de +/- 1 - 3 mm ;
d.) un arrêt est identifié par le module MOC en cas de stationnement prolongé de l'outil de moulage (4, 5, 6) dans lesdits +/- 1 - 3 mm et la barrière lumineuse peut être court-circuitée.

3. Machine de moulage par injection selon la revendication 1 ou 2, **caractérisée en ce qu'**un module de mémoire qui est réinitialisé dès que le signal d'arrêt diminue est lancé lors du démarrage de la surveillance.

4. Machine de moulage par injection selon l'une quelconque des revendications 1 à 3, **caractérisée en ce que** le module MOC présente un éditeur logique séparé, qui communique avec l'API par l'intermédiaire d'une interface définie et présente par ailleurs deux entrées de matériel pour les barres de mesure (10, 12, 13) faisant office de capteurs de trajectoires.

5. Machine de moulage par injection selon l'une quelconque des revendications 1 à 4, **caractérisée par** un programme pour la surveillance de la fenêtre de position d'arrêt, lequel se compose de deux modules, dans laquelle le premier module compare les deux signaux de vitesse des entrées de matériel du module MOC et émet un signal de vitesse fiable, lequel est fourni à un module de surveillance de vitesse, qui reçoit, en plus du signal de vitesse, un signal de validation lequel active/désactive la surveillance et est configuré ce faisant de telle sorte qu'il détecte le changement de position relatif lorsque la surveillance est activée et vérifie si celui-ci reste dans une fenêtre de +/- 1 - 3 mm, dans laquelle la validation de surveillance présuppose que l'outil de moulage (4, 5, 6) soit fermé et que la pression de fermeture soit établie, dans laquelle lesdits signaux sont surveillés dans leur séquence de signaux par l'intermédiaire du module évaluation de commutateur.

6. Machine de moulage par injection selon la revendication 5, **caractérisée en ce que** le signal « position atteinte » est logique 1 pendant la totalité du processus.

7. Machine de moulage par injection selon l'une quelconque des revendications 1 à 6, **caractérisée en ce qu'**un commutateur manométrique surveillance la pression de fermeture de la machine (1).
